# EUROPÄISCHE PATENTSCHRIFT

(11) **EP 0 653 583 B1**
(45) Veröffentlichungstag und Bekanntmachung des Hinweises auf die Patenterteilung: **02.04.2003**
(21) Anmeldenummer: 94117702.4
(22) Anmeldetag: 10.11.1994
(51) Int. Cl.: F16L 41/08, F16L 23/036, F16L 39/00, F01N 7/18, F16L 23/032

(54) **Flanschverbindung**
Flanged coupling
Joint à brides

(30) Priorität: 12.11.1993 DE 4338719; 26.08.1994 DE 4430339
(43) Veröffentlichungstag der Anmeldung: 17.05.1995
(73) Patentinhaber: Heinrich Gillet GmbH & Co. KG, 67480 Edenkoben (DE)
(72) Erfinder: Hein, Manfred, D-71229 Leonberg (DE); Schmitt, Peter, D-71642 Ludwigsburg (DE); Krüger, Klaus, D-73568 Zimmerbach (DE)
(74) Vertreter: Patentanwälte Möll und Bitterich

(56) Entgegenhaltungen:
- WO-A-94/03751
- DE-A- 4 313 091
- GB-A- 1 109 623
- GB-A- 1 133 351
- US-A- 2 831 708

## Beschreibung

Die Erfindung geht aus von einer Verbindung eines Flanschs mit einem Gegenelement.

Zur Zeit werden Auspuffflansche an Motorblöcken mit Hilfe von an dem Motorblock vorhandenen Stehbolzen befestigt. Zu diesem Zweck enthält der Motorblock eine Vielzahl von Stehbolzen, auf die der Flansch aufgefädelt werden muß. Anschließend werden auf die Stehbolzen Muttern aufgeschraubt und festgezogen. Dabei wird eine Anpreßkraft in einer Richtung senkrecht zur Anlagefläche bewirkt.

Die Schrauben sind dabei je nach Krümmergeometrie mehr oder weniger gut zugänglich. Zum Demontieren muß der Krümmer über die gesamte Länge der Stehbolzen abgezogen werden. Dies kann zu räumlichen Problemen führen. Zur Erzielung einer gleichmäßigen Druckverteilung an der Dichtfläche ist eine große Zahl von Verschraubungen notwendig. Darüber hinaus ist die Fertigung des Flansches mit einer großen Zahl von Befestigungsbohrungen aufwendig und der Montageaufwand relativ groß.

Es ist bereits eine Verbindungseinrichtung zum Verbinden zweier Rohre bekannt (WO-A-94 03751). An jedem Rohrende ist ein Flansch mit einer Schrägfläche befestigt. Die Schrägflächen liegen jeweils auf einer Kegelfläche. Zum Festspannen dienen Schrauben, die auf den Schrägflächen angreifen. Da beim Festziehen der Schraube eine Kraftkomponente senkrecht zur Achse der Rohrenden auftritt, muss durch ein Klemmelement dafür gesorgt werden, dass die Achsen der beiden Rohrenden ausgerichtet bleiben. Die einander zugewandten Flächen der Flansche verlaufen parallel zueinander, behalten aber einen Abstand bei.

Der Erfindung liegt die Aufgabe zugrunde, eine Flanschverbindung zu schaffen, die bei einfachem Aufbau eine einfachere Herstellung des Flanschs und eine einfachere Herstellung der Verbindung ermöglicht. Auch das Lösen der Verbindung zum Abnehmen des Flanschs soll erleichtert werden.

Zur Lösung dieser Aufgabe schlägt die Erfindung eine Verbindung mit den Merkmalen des Anspruchs 1 vor. Weiterbildungen der Erfindung sind Gegenstand der Unteransprüche.

Durch die Anordnung der Schrägflächen erhält der Flansch in mindestens einer Richtung eine Keilform, so daß eine Verklemmung durch eine Verschiebung hervorgerufen werden kann. Die Verschiebung braucht nur sehr klein zu sein. Die Verschiebung in einer Richtung parallel zu der Anlagefläche führt aufgrund der Schrägflächen zu einer Anpreßkraft senkrecht zur Anlagefläche, wobei das Verhältnis der beiden Kräfte durch die geeignete Auswahl des Winkels bestimmt werden kann.

Der Flansch benötigt keine mit relativ großem Aufwand herzustellenden Löcher, und das Gegenelement, beispielsweise ein Motorblock, benötigt keine Stehbolzen. Der Platzbedarf zum Einsetzen und wieder Entfernen des Flanschs kann kleiner werden. Durch die relativ einfach herzustellenden Schrägflächen kann eine gleichmäßige Flächenpressung über die gesamte Anlagefläche erreicht werden. Um den Flansch auch bei vorhandenen Konstruktionen von Motorblocks verwenden zu können, kann erfindungsgemäß vorgesehen werden, daß die dem Gegenelement zugeordnete Schrägfläche an einem mit diesem verbindbaren Zusatzelement ausgebildet ist.

Es ist denkbar, daß zur Herstellung der Verbindung ein Einschieben mit einer bestimmten Kraft erfolgt, und daß die Schrägflächen so angeordnet sind, daß eine Selbsthemmung erfolgt, gegebenenfalls auch eine Rastung.

Besonders günstig ist es jedoch, wenn in Weiterbildung der Erfindung vorgesehen ist, daß die Anordnung eine Klemmeinrichtung zur Herstellung der Verklemmung aufweist. Die Klemmeinrichtung kann dabei Teil der Anordnung sein, so daß sie nicht nur die Verklemmung herstellt, sondern auch arretiert.

Insbesondere schlägt die Erfindung vor, daß die Anordnung ein Klemmelement aufweisen kann, das an dem Flansch und/oder dem Gegenelement mit einer Kraftkomponente mindestens parallel zu der Auflagefläche angreift. Das Klemmelement kann beispielsweise direkt parallel zur Auflagefläche angreifen, oder aber auch schräg zur Auflagefläche. In beiden Fällen ist eine Kraftkomponente vorhanden, die zu einer wenn auch kleinen Verschiebung des Flanschs gegenüber dem Gegenelement führt, die ihrerseits die Verkeilung bewirkt.

Insbesondere kann vorgesehen sein, daß die Klemmeinrichtung eine oder mehrere Klemmschrauben aufweist.

Ebenfalls möglich ist es, daß die Klemmeinrichtung ein Exzenterelement aufweist oder aber auch einen Kniehebel.

Es kann vorgesehen sein, daß der Flansch selbst keine Schrägflächen aufweist, sondern mit Bauteilen zusammenwirkt, die ihrerseits die Klemmflächen aufweisen. Diese Bauteile könnten beispielsweise in Form von Winkelleisten an den Seiten des Flanschs angreifen.

Besonders günstig ist es aber, wenn die dem Flansch zugeordnete mindestens eine Schrägfläche an dem Flansch selbst ausgebildet ist. Dies kann beispielsweise durch eine Abfasung einer Längskante erfolgen.

Die Erfindung schlägt in Weiterbildung vor, daß der Flansch an zwei gegenüberliegenden Seiten Schrägflächen aufweisen kann, insbesondere an den Längsseiten, wenn der Flansch in Richtung seiner Anlagefläche eine Längserstreckung aufweist.

Das Vorsehen zweier Schrägflächen führt mit geringem Aufwand zu einer guten Vergleichmäßigung der Flächenpressung.

Erfindungsgemäß kan vorgesehen sein, daß die mindestens eine Schrägfläche des Flanschs nach außen hin abfallend ausgebildet ist. In diesem Fall kann der Flansch, wenn er zwei Schrägflächen aufweist, im Querschnitt etwa Trapezform aufweisen.

In Weiterbildung der Erfindung kann vorgesehen sein, daß die Schrägflächen des Flanschs in dessen Längsrichtung abfallend ausgebildet sind.

Selbstverständlich ist es auch möglich, daß die Schrägflächen in mehreren Richtungen abfallend ausgebildet sind.

Die Erfindung schlägt in nochmaliger Weiterbildung vor, daß die Schrägflächen des Flanschs und/oder des Gegenelements an einzelnen Vorsprüngen ausgebildet sein können. Dies kann dazu dienen, den Platzbedarf beim Einbau und Ausbau zu verringern.

In Weiterbildung kann vorgesehen sein, daß eine Schrägfläche, insbesondere eine dem Gegenelement zugeordnete Schrägfläche, von einer Wand einer Nut gebildet wird.

Es kann erfindungsgemäß vorgesehen sein, daß eine Schrägfläche, insbesondere eine dem Gegenelement zugeordnete Schrägfläche, an einem von der Klemmeinrichtung beaufschlagten Teil ausgebildet ist, beispielsweise einer Klemmleiste. Diese Klemmleiste kann an einer seitlichen Schrägfläche des Flanschs angreifen und quer beaufschlagt sein, beispielsweise mit Hilfe von Zug- oder Druckschrauben.

Ebenfalls möglich ist es, daß eine dem Gegenelement zugeordnete Schrägfläche an einer Klemmschraube ausgebildet ist.

Der Flansch kann dabei für die Anbringung von Rohren sowohl an der Einlaßseite als auch an der Auslaßseite des Motorblocks vorgesehen sein.

Beim Stand der Technik sind an den Motorblöcken die Schrauben je nach Krümmergeometrie mehr oder weniger gut zugänglich. Zum Festziehen der auf die Stehbolzen aufgefädelten Sechskantmuttern ist ein bestimmtes Drehmoment erforderlich. Zu einer schnellen Montage mit dem erforderlichen Drehmoment sollen alle Sechskantmuttern mit einem Mehrfachschrauber festgezogen werden können. Um dieser Forderung nachzukommen, muß die Zugänglichkeit zu den Sechskantmuttern bei der Konstruktion des Auspuffkrümmers berücksichtigt werden. Daher müssen die Zylinderrohre um die Befestigungspunkte herum konstruiert werden. Bei mehrschaligen Krümmern zu Isolierzwecken müssen zusätzliche Durchbrüche in den Isolierschalen vorgesehen werden. Dadurch erhöht sich der Aufwand in der Entwicklung und Herstellung solcher Konstruktionen. Um auch hier die Erfindung anwenden zu können, schlägt diese vor, daß das Zusatzelement in Form einer Leiste an dem Motorblock angeschraubt werden kann. Insbesondere kann die Leiste mit Hilfe der bereits vorhandenen Stehbolzen befestigt werden. Die vorzugsweise als Gesamtheit vorliegende Leiste kann relativ einfach auf die Stehbolzen aufgesetzt und dort mit Hilfe von Federringen und Sechskantmuttern angeschraubt werden. Dabei können in der Leiste die erwähnten Klemmschrauben schon eingesetzt sein.

Erfindungsgemäß kann in nochmaliger Weiterbildung vorgesehen sein, daß der Flansch zwischen zwei Leisten verklemmt wird, die beide mit Hilfe der Stehbolzen an dem Motorblock befestigt werden können.

Erfindungsgemäß kann vorgesehen sein, daß der Flansch an seiner einen Längsseite Zungen aufweist, die in entsprechende Ausnehmungen in der Leiste eingreifen. Es kann vorgesehen sein, daß eine der Zungen als beidseits wirkender Anschlag zur Ausrichtung des Flanschs in Längsrichtung ausgebildet ist, während die übrigen Zungen verkleinerte Abstände zur Ermöglichung eines Längenausgleichs bei Temperaturänderungen aufweisen können.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung bevorzugter Ausführungsform der Erfindung sowie anhand der Zeichnung. Hierbei zeigen:
- Fig. 1: schematisch einen Querschnitt durch eine Flanschverbindung nach der Erfindung;
- Fig. 2: eine stark vereinfachte Aufsicht auf eine zweite Ausführungsform;
- Fig. 3: einen Schnitt etwa längs Linie V-V in Fig. 2;
- Fig. 4: in verkleinertem Maßstab eine Aufsicht auf einen Flansch.
- Fig. 5: schematisch das Einlegen eines zur Vereinfachung ohne Rohre gezeichneten Flanschs zwischen zwei Leisten;
- Fig. 6: vereinfacht den Zustand des Flanschs zwischen den beiden Leisten.

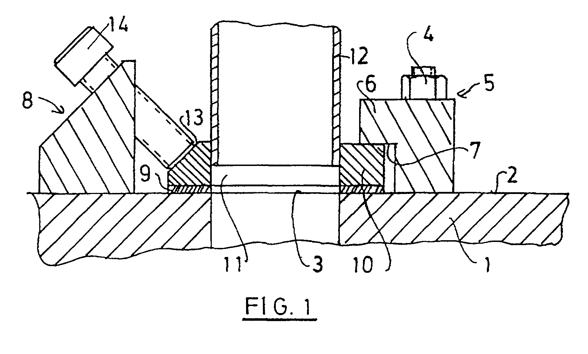

Fig. 1 zeigt im Teilschnitt einen Teil eines Motorblocks 1 mit einer in einer Auflagefläche 2 mündenden Öffnung 3. Die Auflagefläche 2, die auch als Dichtfläche bezeichnet wird, ist im dargestellten Beispiel eben, was aber nicht unbedingt erforderlich ist.

Die Auflagefläche 2 wird auf der einen Seite von einer mit dem Motorblock verbundenen Leiste 5 begrenzt, die auf ihrer der Auflagefläche 2 zugewandten Seite hinterschnitten ist. Dadurch wird in der der Auflagefläche 2 zugewandten Seite der Leiste 4 eine Nut 7 gebildet, deren eine Seitenwand von der Auflagefläche 2 des Motorblocks 1 gebildet wird. Der Boden verläuft rechtwinklig zur Auflagefläche 2. Die gegenüberliegende Seitenwand der Nut 7 könnte als Schrägfläche ausgebildet sein und unter einem Winkel von etwa 30° gegenüber der Auflagefläche 2 verlaufen.

Auf der gegenüberliegenden Seite der Auflagefläche 2 ist diese von einem Vorsprung 8 begrenzt. Durch den Vorsprung 8 erstreckt sich eine Gewindebohrung, in die eine Klemmschraube 14 eingeschraubt ist. Die Längsachse der Klemmschraube 14 verläuft unter einem Winkel von etwa 45 ° gegenüber der Auflagefläche 2 des Motorblocks 1. Die der Auflagefläche 2 zugewandte Unterseite des Vorsprungs 8 könnte unter einem Winkel von etwa 45° verlaufen.

Auf die Auflagefläche 2 des Motorblocks 1 ist ein Flansch 10 unter Zwischenlage einer Dichtplatine 9 aufgesetzt. Die dünne Dichtplatine 9 weist parallele Seitenflächen auf. Die unter Zwischenlage der Dichtplatine 9 auf der Auflagefläche 2 des Motorblocks 1 liegende Anlagefläche des Flanschs 10 ist im dargestellten Beispiel ebenfalls eine ebene Fläche, entsprechend der Form der Auflagefläche 2 des Motorblocks 1.

Der Flansch enthält im dargestellten Beispiel eine Öffnung 11, in die von der gegenüberliegenden Seite ein Rohr 12 eingesetzt und befestigt ist. Beispielsweise ist das Rohr 12 im Bereich seiner Stirnkante festgeschweißt.

Die Anlagefläche des Flanschs 10 umgibt die Öffnung 11, die für das Rohr 12 vorgesehen ist, auf allen Seiten.

Im Bereich der oberen Seitenkanten ist der Flansch 10 mit einer Schrägfläche 13 versehen.

Auf der gegenüberliegenden Seite ist die Schrägfläche 13 unter einem Winkel von 45° gegenüber der Anlagefläche schräg ausgebildet, so daß die vordere Stirnfläche der Klemmschraube 14 flächig auf der Schrägfläche 13 des Flanschs 10 aufliegt. Ein Festschrauben der Klemmschraube 14 mit Hilfe eines Schraubenschlüssels o. dgl. führt zu einer Beaufschlagung des Flanschs 10 mit einer Kraftkomponente in einer Richtung parallel zur Auflagefläche 2. Dies führt zu einer geringfügigen Verschiebung des Flanschs 10 in Richtung auf die Nut 7 und wegen der dort vorhandenen Schrägflächen 13 auch zu einer Anpressung des Flanschs auf die Dichtfläche 2. Gleichzeitig erzeugt die Klemmschraube 14 auch eine Anpresskraft an der ihr zugeordneten Schrägfläche 13.

Zum Lösen der Verbindung wird die Klemmschraube 14 aufgeschraubt, bis ihre Stirnfläche etwa mit der Seite des Vorsprungs 8 fluchtet. Dann kann der Flansch 10 aus der Nut 7 ausgerückt und durch Verkippen im Gegenuhrzeigersinn aus dem Zwischenraum zwischen der Leiste 5 und dem Vorsprung 8 herausgenommen werden.

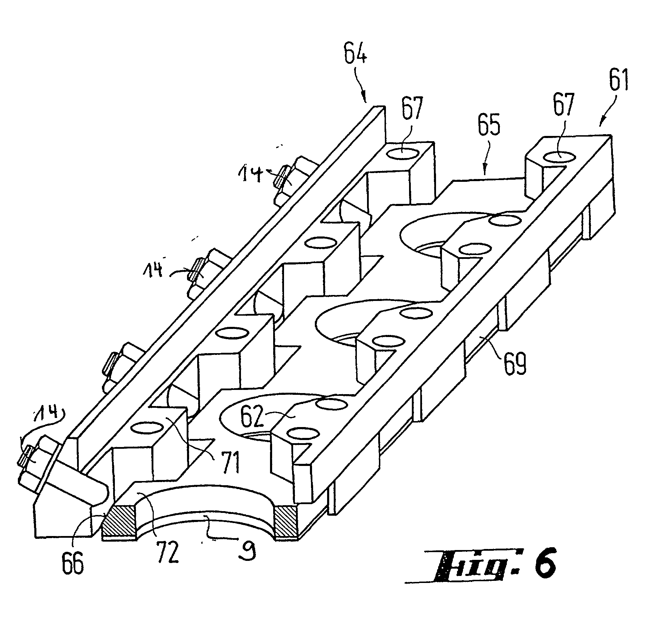

Die Montage dieser beschriebenen Anordnung kann so erfolgen, dass zunächst mit Hilfe von nicht dargestellten Stehbolzen die beiden Leisten an dem Motorblock 1 angeschraubt werden. Anschließend kann der Flansch 10 in der in den Fig. 6 und 7 dargestellten Weise schräg eingelegt, auf die Dichtfläche 2 gekippt und anschließend mit Hilfe der Klemmschrauben 14 verklemmt werden.

Erfindungsgemäß kann zur Ausrichtung des Flansch in eine Richtung senkrecht zur dargestellten Schnittebene ein Anschlag oder eine Ausrichthilfe vorgesehen sein.

Wenn der Flansch 10 der Fig. 1 zur Befestigung mehrerer Rohre 12 dienen soll, so kann der Vorsprung 18 ebenfalls leistenförmig ausgebildet sein und über die Längsrichtung des Flanschs 10 verteilt mehrere Klemmschrauben 14 aufweisen.

Sofern dazu der Platz vorhanden ist, kann die Entnahme auch durch eine Verschiebung senkrecht zur Schnittebene erfolgen.

Bei einer nicht dargestellten Ausführungsform, weist der Flansch drei Öffnungen zur Aufnahme je eines Rohrs auf. Der Flansch ist in diesem Fall langgestreckt ausgebildet und weist zwei Stirnseiten und zwei Längsseiten auf. Im Bereich der oberen Kanten der Längsseiten enthält der Flansch in ähnlicher Weise wie der Flansch 11 der Fig. 1 Schrägflächen, die in dem Beispiel flacher ausgebildet sind.

Die beiden Schrägflächen weisen auf beiden Längsseiten die gleiche Steigung auf.

Die eine Längsseite greift in ähnlicher Weise wie bei Fig. 1 in eine Nut ein, die an einer Leiste ausgebildet ist, die einstückig mit dem Motorblock ausgebildet ist. Die eine Seitenwand dieser Nut bildet eine dem Motorblock zugeordnete Schrägfläche.

Gegenüberliegend wird die Auflagefläche von einer rechtwinklig zu ihr verlaufenden Leiste begrenzt.

Die Leisten enthalten mehrere miteinander fluchtende Bohrungen, die in Längsrichtung des Flanschs gesehen zwischen je zwei benachbarten Öffnungen angeordnet sind.

Auf die Schrägfläche des Flanschs wird eine Klemmleiste aufgelegt, die an ihrer Unterseite eine mit der Schrägfläche zusammenwirkende dem Motorblock zugeordnete Schrägfläche aufweist. Die Klemmleiste enthält mehrere quer verlaufende Gewindebohrungen. Klemmschrauben sind durch die Bohrungen der Leiste hindurchgesteckt und werden mit einem vorderen Gewindeabschnitt in die Gewindebohrungen der Klemmleiste eingeschraubt. Der vordere freie Endbereich der Klemmschrauben, der kein Gewinde aufweist, greift mit kleinem radialem Spiel in die entsprechenden Bohrungen der Leiste ein. Dadurch ist der vordere Endbereich geführt. Ein Festdrehen der Klemmschraube durch Angreifen an ihrem Schraubenkopf führt zu einer Querverschiebung der Klemmleiste, die aufgrund der flächigen Anlage der beiden Schrägflächen zu einer Anpressung der Auflagefläche des Flanschs auf der Anlagefläche des Motorblocks führt.

Die Klemmleiste ist mit Einschnitten versehen, die den Rohren entsprechen.

Zum Lösen der Verbindung werden die Klemmschrauben gelöst und die Klemmleiste entnommen. Dann kann der Flansch wieder aus der seitlichen Nut gelöst und nach oben oder zur Seite entnommen werden.

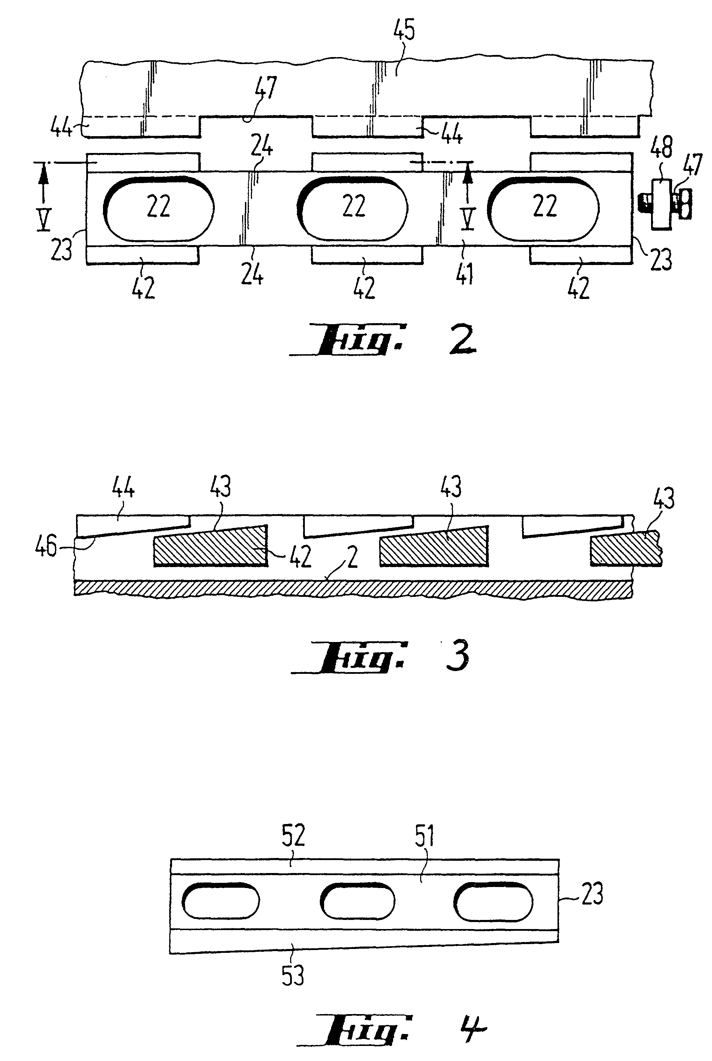

In den Figuren 2 und 3 ist eine nochmals weitere Ausführungsform eines von der Erfindung vorgeschlagenen Flanschs 41 dargestellt. Der Flansch 41 weist etwa die gleiche Anordnung wie bei der vorhergehenden Ausführungsform auf, jedoch sind im Bereich seiner Längsseiten 24 einzelne Vorsprünge 42 angeordnet, zwischen denen Platz bleibt. Die Vorsprünge 42 weisen auf ihren Oberseiten Schrägflächen 43 auf, siehe auch Fig. 3, die im Längsschnitt ansteigend ausgebildet sind, so daß die Steigung also parallel zur Längsrichtung verläuft. Alle Vorsprünge 42 weisen gleichgerichtete Schrägfläche 43 auf.

Die axiale Erstreckung aller Vorsprünge 42 entspricht dem Abstand von jeweils zwei Vorsprüngen 44 einer Ausbildung 45 am Motorblock. In Fig. 2 sind die Vorsprünge 42 und 44 einander gegenüberliegend dargestellt, um zu zeigen, daß die Vorsprünge 42 und 44 im wesentlichen die gleiche Länge aufweisen. Die Vorsprünge 44 an der Motorblockseite weisen auf ihrer Unterseite, siehe wiederum Fig. 3, Schrägflächen 46 auf, deren Neigung der Neigung der Schrägflächen 43 gleich ist. Ausgehend in der von Fig. 2 dargestellten Position wird der Flansch 21 um die axiale Länge eines Vorsprungs 42 nach rechts versetzt und etwas nach oben geschoben angeordnet, bis die Vorsprünge 42 in den Lücken 47 zwischen je zwei Vorsprüngen 44 liegen. Dann wird der Flansch 41 abgesenkt, bis die Vorsprünge 42 unter den Vorsprüngen 44 liegen. Anschließend erfolgt eine Verschiebung nach links in Fig. 2 und 3. Dabei gelangen dann die an der Oberseite der Vorsprünge 42 angeordneten Schrägflächen 43 zur Anlage an den an der Unterseite der Vorsprünge 44 angeordneten Schrägflächen 46 und beim weiteren Verschieben erfolgt eine Verklemmung des Flansches 41 auf der Auflagefläche 2. Zum Verschieben und/oder Arretieren des Flanschs in der verklemmten Stellung kann die in Fig. 2 schematisch angedeutete Klemmschraube 47 dienen, die durch ein Element 48 des Motorblocks 1 hindurchgeschraubt ist und deren Drehachse in Längsrichtung des Flanschs 41 verläuft. In diesem Fall erfolgt also eine Beaufschlagung exakt in einer Richtung parallel zur Dichtfläche 2, während die Klemmkräfte ausschließlich durch die Schrägflächen 43, 46 erzeugt werden.

Die Ausführungsform nach den Figuren 2 und 3 ermöglicht ein Einsetzen ohne ein Verkippen des Flanschs.

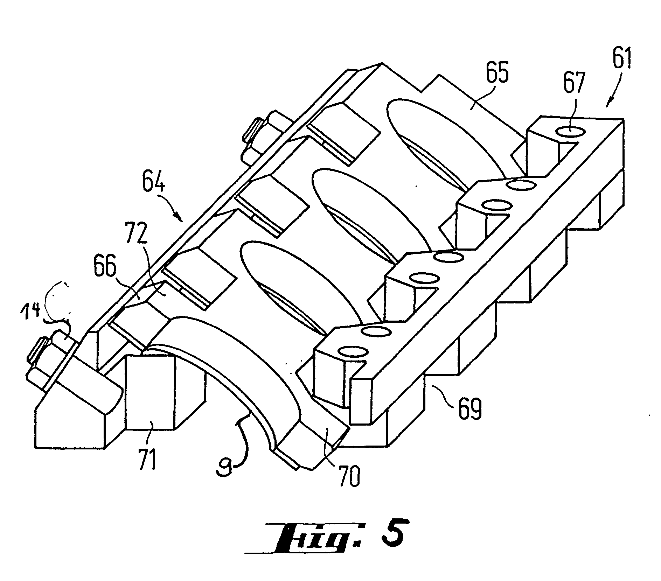

Fig. 4 zeigt in verkleinertem Maßstab eine weitere Ausführungsform, bei der im Bereich der Längsseiten des Flanschs 51 Schrägflächen 52, 53 vorhanden sind, von denen die eine Schrägfläche 52 in der gleichen Weise ausgebildet ist wie die Schrägfläche der nicht dargestellten Ausführungsform, während die Schrägfläche 53 sowohl zur Seitenkante als auch zur Stirnkante 23 hin abfällt. Bei der Ausführungsform nach Fig. 4 kann eine Verklemmung ebenfalls durch Verschiebung in Längsrichtung erfolgen, in diesem Fall von links nach rechts.

Während die Fig. 1 eine schematische Darstellung war, zeigt die Fig. 5 und 6 die beiden Leisten und den Flansch in größerer Einzelheit. Zur Form der Leisten wird zunächst auf die Fig. 6 Bezug genommen.

Fig. 6 zeigt die Anordnung von Klemmleiste 61, Spannleiste 64 und Flansch 65 in montierter Position, wobei zur Vereinfachung sowohl die Rohre 12 als auch der Motorblock 1 weggelassen sind.

Die Klemmleiste 61 weist mehrere Bohrungen 67 für die Stehbolzen 60 auf. Die Anordnung und der Abstand dieser Bohrungen entspricht also den Stehbolzen 60 des Motorblocks, für den die Anordnung bestimmt ist.

Die Klemmleiste 61 weist in Richtung auf die gegenüberliegende Spannleiste 64 gerichtete Vorsprünge 62 auf, in denen die Bohrungen 67 jeweils paarweise angeordnet sind. Alle Vorsprünge 62 sind an einem durchgehenden Teil 68 der Klemmleiste 61 ausgebildet.

Zwischen je zwei Vorsprüngen 62 sind Ausnehmungen 69 gebildet, die zur Aufnahme von seitlichen Zungen 70 dienen, die an der der Klemmleiste 61 zugeordneten Längsseite des Flanschs 65 ausgebildet sind.

Die gegenüberliegende Spannleiste 64 weist auf ihrer der Klemmleiste 61 zugewandten Innenseite ebenfalls eine Reihe von Vorsprüngen 71 auf, in denen Bohrungen 67 zur Aufnahme der Spannbolzen 60 enthalten sind. Zwischen den Vorsprüngen 71 sind die schräg verlaufenden Gewindebohrungen für die Klemmschrauben 14 angeordnet.

Der Flansch 65 weist auf seiner der Spannleiste 64 zugeordneten Längsseite ebenfalls Zungen 72 auf, die an der gleichen Längsposition angeordnet sind wie die Zungen 70 auf der gegenüberliegenden Längsseite. An der Außenseite der Zungen 72 sind die Schrägflächen 66 ausgebildet, an denen die Stirnflächen der Klemmschrauben 14 angreifen.

Von den mehreren Zungen 70, 72 kann eine eine in Längsrichtung des Flanschs gemessene Längsabmessung aufweisen, die dem Abstand zwischen den Innenseiten zweier benachbarter Vorsprünge 62 bzw. 71 entspricht. Dadurch kann eine Ausrichtung des Flanschs 65 in Längsrichtung erreicht werden. Die übrigen Zungen können zum Längenausgleich bei Temperaturänderungen etwas kürzer sein. Die Befestigung des Flanschs geschieht folgendermaßen. Zunächst werden an dem Motorblock 1 die Klemmleiste 62 und die Spannleiste 64 festgeschraubt.

Anschließend wird der mit dem Abgaskrümmer versehene Flansch 65 in der in Fig. 5 zu sehenden Weise eingeführt. Er wird etwas schräg gehalten, was wegen der Zwischenräume zwischen den Vorsprüngen 62 möglich ist. Die Zungen 70 werden in die Ausnehmungen 69 eingeschoben, und anschließend der Flansch 65 zur flächigen Anlage auf der Dichtfläche 2 verkippt. Anschließend werden die Klemmschrauben 14 festgezogen, so daß jetzt der Flansch 65 seitlich mit den Zungen 70 so weit in die Ausnehmung 69 eingeschoben wird, bis die zwischen den Zungen 70 gebildeten Seitenflächen des Flanschs 65 an den Vorsprüngen 62 zur Anlage kommen. Ein weiteres Festziehen der Klemmschrauben 14 führt zu einer Verspannung des Flanschs in Richtung auf die Auflagefläche 2 unter Zwischenlage der Dichtung 9.

Die Dichtung 9 kann beispielsweise, wenn sie aus Blech gefertigt ist, mit Hilfe eines Clips an einer oder beiden Stirnseiten des Flanschs 65 befestigt werden. Hierzu kann der Flansch 65 eine Aussparung, eine Kerbe o. dgl. aufweisen.

Der durch Klemmwirkung zu befestigende Flansch nach der Erfindung hat den Vorteil, daß er auch vorhandenen Motorblöcken verwendet werden kann. Das Anbringen der beiden Leisten 61, 64 kann vor Montage des Flanschs erfolgen, auch an einer Stelle, wo genügend Platz zur Verfügung steht.

Die Leisten 64, 64 und der Flansch 65 sind so aufeinander abgestimmt, daß die Klemmschrauben 14 auf Anschlag festgezogen werden können. Als Schraubensicherung für die Klemmschrauben 14 können handelsübliche Federringe bzw. Federscheiben verwendet werden.

Als Montageerleichterung wird die Dichtung 9, die nach dem Stand der Technik auf die Stehbolzen aufgesteckt wird, jetzt direkt an dem Flansch 65 befestigt.

## Patentansprüche

1. Verbindung eines Flanschs (10, 41, 65), der
1.1 mindestens ein Rohr (12),
1.2 eine die Mündung des Rohrs (12) umgebende Anlagefläche sowie
1.3 mindestens eine ihm zugeordnete Schrägfläche aufweist, die
1.3.1 unter einem spitzen Winkel gegenüber der Anlagefläche verläuft,
mit einem Gegenelement (1), das
1.4 mindestens eine Öffnung (3),
1.5 eine die Öffnung (3) umgebende Auflagefläche (2), die
1.5.1 zur gegenseitigen Anlage an der Anlagefläche des Flanschs (10, 41, 65), gegebenenfalls unter Zwischenlage einer Dichtung (9), ausgebildet ist, sowie
1.6 mindestens eine ihm zugeordnete Schrägfläche aufweist, die
1.6.1 unter einem spitzen Winkel gegenüber der Auflagefläche (2) verläuft und
1.6.2 zur Anlage an der Schrägfläche (13, 66) des Flanschs (10, 41, 65) ausgebildet ist, wobei das Gegenelement ein Motorblock (1) ist.

2. Verbindung nach Anspruch 1, bei der die dem Gegenelement (1) zugeordnete Schrägfläche an einem mit dem Gegenelement (1) verbindbaren Zusatzelement (8) ausgebildet ist.

3. Verbindung nach Anspruch 1 oder 2 mit einer Klemmeinrichtung zur Herstellung einer Verklemmung bzw. Verkeilung zwischen dem Flansch und dem Gegenelement.

4. Verbindung nach einem der Ansprüche 1 bis 3, mit mindestens einem Klemmelement, das an dem Flansch (10, 41, 65) und/oder dem Gegenelement (1) mit einer Kraftkomponente mindestens parallel zu der Auflagefläche angreift.

5. Verbindung nach Anspruch 3 oder 4, bei der die Klemmeinrichtung eine Klemmschraube (14) aufweist.

6. Verbindung nach Anspruch 3 oder 4, bei der die Klemmeinrichtung ein Exzenterelement aufweist.

7. Verbindung nach Anspruch 3 oder 4, bei der die Klemmrichtung einen Kniehebel aufweist.

8. Verbindung nach einem der vorhergehenden Ansprüche, bei der die dem Flansch (10, 41, 65) zugeordnete Schrägfläche (13, 66) an dem Flansch (10, 41, 65) selbst ausgebildet ist.

9. Verbindung nach einem der vorhergehenden Ansprüche, bei der der Flansch (10, 41, 65) an zwei gegenüberliegenden Seiten Schrägflächen (13, 66) aufweist.

10. Verbindung nach einem der vorhergehenden Ansprüche, bei der die Schrägflächen (13, 66) des Flanschs (10, 41, 65) nach außen abfallend ausgebildet sind.

11. Verbindung nach einem der vorhergehenden Ansprüche, bei der die Schrägflächen (43) des Flanschs (41) in dessen Längsrichtung abfallend ausgebildet sind.

12. Verbindung nach einem der vorhergehenden Ansprüche, bei der die Schrägflächen (43, 66) des Flanschs (41, 65) und/oder des Gegenelements (1) an einzelnen Vorsprüngen (42, 44) ausgebildet sind.

13. Verbindung nach einem der vorhergehenden Ansprüche, bei der eine dem Gegenelement (1) zugeordnete Schrägfläche von einer Wand einer Nut gebildet wird.

14. Verbindung nach einem der Ansprüche 3 bis 14, bei der eine dem Gegenelement (1) zugeordnete Schrägfläche an einem von der Klemmeinrichtung beaufschlagten Teil ausgebildet ist, insbesondere einer Klemmleiste.

15. Verbindung nach einem der vorhergehenden Ansprüche, bei dem eine dem Gegenelement (1) zugeordnete Schrägfläche an einer Klemmschraube (14) ausgebildet ist.

16. Verbindung nach einem der Ansprüche 2 bis 15, an dem das Zusatzelement vorzugsweise in Form einer für alle Öffnungen (3) durchgehenden Leiste (8) anschraubbar ist, wobei diese insbesondere mit Hilfe der vorhandenen Stehbolzen (4) und/oder den vorhandenen Gewindebohrungen angeschraubt wird.

17. Verbindung nach Anspruch 16, bei der der Flansch (10) zwischen zwei Leisten (5, 8) verspannt wird, die beide mit den Stehbolzen (4) befestigt werden.

18. Verbindung nach Anspruch 16 oder 17, bei der der Flansch (65) an seiner einen Längsseite Zungen (70, 72) aufweist, die in Ausnehmungen der Leiste einschiebbar sind.

19. Verbindung nach einem der vorhergehenden Ansprüche, bei der der Flansch (10, 41, 65) zur Verbindung von Einlaßrohren oder Auslaßrohren ausgebildet ist.

## Claims

1. A connection for a flange (10,41,65), which has
1.1 at least one pipe (12),
1.2 an abutment surface surrounding the mouth of the pipe (12), and also
1.3 at least one inclined surface associated therewith, which
1.3.1 extends at an acute angle to the abutment surface, with a counter member (1) which
1.4 has at least one opening (3),
1.5 a bearing surface (2) surrounding the opening (3), which
1.5.1 is designed for mutual abutment against the abutment surface of the flange (10,41,65), optionally with the interposition of a seal (9), and also
1.6 at least one inclined surface associated therewith, which
1.6.1 extends at an acute angle to the bearing surface (2) and
1.6.2 is designed to abut against the inclined surface (13, 66) of the flange (10,41,65), wherein the counter member (1) is an engine block (1).

2. A connection according to Claim 1, in which the inclined surface associated with the counter member (1) is formed on an auxiliary member (8) which can be connected to the counter member (1).

3. A connection according to Claim 1 or 2 with a clamping means to effect jamming or wedging between the flange and the counter member.

4. A connection according to any one of Claims 1 to 3, with at least one clamping member which acts on the flange (10,41,65) and/or on the counter member (1) with a force component at least parallel to the bearing surface.

5. A connection according to Claim 3 or 4, in which the clamping means has a clamping screw (14).

6. A connection according to Claim 3 or 4, in which the clamping means has an eccentric member.

7. A connection according to Claim 3 or 4, the clamping means has a toggle lever.

8. A connection according to any one of the preceding Claims, in which the inclined surface (13,66) associated with the flange (10,41,65) is formed on the flange (10,41,65) itself.

9. A connection according to any one of the preceding Claims, in which the flange (10,41,65) has inclined surfaces (13,66) on two opposite sides.

10. A connection according to any one of the preceding Claims, in which the inclined surfaces (13,66) of the flange (10,41,65) are formed downwardly sloping towards the outside.

11. A connection according to any one of the preceding Claims, in which the inclined surfaces (43) of the flange (41) are formed downwardly sloping in its longitudinal direction.

12. A connection according to any one of the preceding Claims, in which the inclined surfaces (43,66) of the flange (41,65) and/or of the counter member (1) are formed on individual projections (42,44).

13. A connection according to any one of the preceding Claims, in which one inclined surface associated with the counter member (1) is formed by a wall of a groove.

14. A connection according to any one of Claims 3 to 14, in which an inclined surface associated with the counter member (1) is formed on a part acted upon by the clamping means, in particular a clamping bar.

15. A connection according to any one of the preceding Claims, in which an inclined surface associated with the counter member (1) is formed on a clamping screw (14).

16. A connection according to any one of Claims 2 to 15, to which the auxiliary member, preferably in the form of a bar (8) which is continuous for all openings, can be screwed, wherein said bar is screwed in particular by means of the stay bolts (4) provided and/or the threaded bores provided.

17. A connection according to Claim 16, in which the flange (10) is braced between two bars (5,8), both of which are fastened with the stay bolts (4).

18. A connection according to Claim 16 or 17, in which on one longitudinal side the flange (65) has tongues (70,72) which can be inserted into recesses of the bar.

19. A connection according to any one of the preceding Claims, in which the flange (10,41,65) is designed for the connection of inlet pipes or outlet pipes.

## Revendications

1. Joint à brides (10, 41, 65) comprenant
1.1 au moins un tube (12),
1.2 une surface d'appui entourant l'embouchure du tube (12) et
1.3 au moins une surface inclinée qui lui est attribuée, qui
1.3.1 forme un angle aigu par rapport à la surface d'appui
avec un élément opposé (1), qui comprend
1.4 au moins une ouverture (3),
1.5 une surface d'appui (2) entourant l'ouverture (3), qui
1.5.1 est conçue pour un appui réciproque sur la surface d'appui de la bride (10, 41, 65), éventuellement en intercalant un joint (9), et
1.6 au moins une surface inclinée qui lui est attribuée, qui
1.6.1 forme un angle aigu par rapport à la surface d'appui (2) et qui
1.6.2 est conçue pour l'appui des surfaces inclinées (13, 66) de la bride (10, 41, 65), l'élément opposé étant un bloc moteur (1).

2. Joint selon la revendication 1, **caractérisé en ce que** la surface inclinée attribuée à l'élément opposé (1) est formée sur un élément complémentaire (8) pouvant être relié à l'élément opposé (1).

3. Joint selon la revendication 1 ou 2, **caractérisé en ce qu'**il comprend un dispositif de serrage pour réaliser un serrage ou un calage entre la bride et l'élément opposé.

4. Joint selon l'une des revendications 1 à 3, **caractérisé en ce qu'**il comprend au moins un élément de serrage, qui agit sur la bride (10, 41, 65) et/ou sur l'élément opposé (1) avec une composante de force au moins parallèle à la surface d'appui.

5. Joint selon la revendication 3 ou 4, **caractérisé en ce que** son dispositif de serrage comprend une vis de serrage (14).

6. Joint selon la revendication 3 ou 4, **caractérisé en ce que** son dispositif de serrage comprend un élément excentrique.

7. Joint selon la revendication 3 ou 4, **caractérisé en ce que** son dispositif de serrage comprend un levier à genouillère.

8. Joint selon l'une des revendications précédentes, **caractérisé en ce que** la surface inclinée (13, 66) attribuée à la bride (10, 41, 65) est formée sur la bride même (10, 41, 65).

9. Joint selon l'une des revendications précédentes, **caractérisé en ce que** la bride (10, 41, 65) présente des surfaces inclinées (13, 66) sur deux côtés opposés.

10. Joint selon l'une des revendications précédentes, **caractérisé en ce que** les surfaces inclinées (13, 66) de la bride (10, 41, 65) sont formées avec une pente vers l'extérieur.

11. Joint selon l'une des revendications précédentes, **caractérisé en ce que** les surfaces inclinées (43) de la bride (41) sont formées avec une pente dans sa direction longitudinale.

12. Joint selon l'une des revendications précédentes, **caractérisé en ce que** les surfaces inclinées (43, 66) de la bride (41, 65) et/ou de l'élément opposé (1) sont formées sur des avancées individuelles (42, 44).

13. Joint selon l'une des revendications précédentes, **caractérisé en ce qu'**une surface inclinée attribuée à l'élément opposé (1) est formée par une paroi d'une rainure.

14. Joint selon l'une des revendications 3 à 14, **caractérisé en ce qu'**une surface inclinée attribuée à l'élément opposé (1) est formée sur une partie sur laquelle agit le dispositif de serrage, en particulier sur une lame de serrage.

15. Joint selon l'une des revendications précédentes, **caractérisé en ce qu'**une surface inclinée attribuée à l'élément opposé (1) est formée sur une vis de serrage (14).

16. Joint selon l'une des revendications 2 à 15, **caractérisé en ce que** l'élément complémentaire peut être vissé de préférence sous la forme d'une barre continue (8) pour toutes les ouvertures (3), celle-ci étant vissée en particulier à l'aide des goujons filetés existants (4) et/ou des trous taraudés existants.

17. Joint selon la revendication 16, **caractérisé en ce que** la bride (10) est serrée entre deux barres (5, 8), les deux étant fixées par les goujons filetés (4).

18. Joint selon la revendication 16 ou 17, **caractérisé en ce que** la bride (65) comprend, sur l'un de ses bords longitudinaux, des languettes (70, 72) qui peuvent être introduites dans des évidements de la barre.

19. Joint selon l'une des revendications précédentes, **caractérisé en ce que** la bride (10, 41, 65) est conçue pour assurer la liaison de tubes d'entrée ou de tubes de sortie.
